# EUROPÄISCHE PATENTSCHRIFT

(11) **EP 3 371 028 B1**
(45) Veröffentlichungstag und Bekanntmachung des Hinweises auf die Patenterteilung: **21.08.2019**
(21) Anmeldenummer: 16822144.8
(22) Anmeldetag: 16.12.2016
(51) Int. Cl.: B61D 17/02

(54) **SCHIENENFAHRZEUG MIT EINEM VERKLEIDETEN DREHGESTELL**
RAIL VEHICLE HAVING A COVERED BOGIE
VÉHICULE FERROVIAIRE ÉQUIPÉ D'UN BOGIE MUNI D'UN HABILLAGE

(30) Priorität: 27.01.2016 DE 102016201154
(43) Veröffentlichungstag der Anmeldung: 12.09.2018
(73) Patentinhaber: Siemens Mobility GmbH, 81739 München (DE)
(72) Erfinder: GRZONA, Andreas, 47638 Straelen (DE); KRAUSE, Martin, 47495 Rheinberg (DE); WEISS, Thomas, 80636 München (DE)
(86) Internationale Anmeldenummer: PCT/EP2016/081383
(87) Internationale Veröffentlichungsnummer: WO 2017/129317

(56) Entgegenhaltungen:
- WO-A1-2014/206643
- DE-A1-102004 041 090
- DE-A1-102008 045 952
- JP-A- 2015 229 492

## Beschreibung

Die Erfindung bezieht sich auf ein Schienenfahrzeug mit einem Drehgestell, das derart verkleidet ist, dass eine Drehgestellkavität vorliegt, die von einer Verkleidungsanordnung und dem Drehgestell benachbarten Wandungen im Unterflurbereich des Schienenfahrzeugs gebildet ist, und mit einer Vorrichtung zur Erzeugung druckbeaufschlagter Luft.

Ein solches Schienenfahrzeug ist beispielsweise aus der DE 10 2004 041 090 A1 bekannt. Insbesondere bei Schienenfahrzeugen, die im Hochgeschwindigkeitsverkehr eingesetzt sind, sind Drehgestelle des Schienenfahrzeugs zur Verminderung eines Luftwiderstands weitgehend verkleidet. Dabei erstreckt sich eine solche Verkleidung beispielsweise teilweise unterhalb eines Drehgestellrahmens, ggf. noch schräg aufwärts an der Vorder- bzw. Hinterseite des Drehgestells. Gemeinsam mit angrenzenden/benachbarten Wandungen des Schienenfahrzeugs ist das Drehgestell somit in eine Kavität eingebettet. Abhängig von einer Dichtigkeit dieser Kavität wird diese gerade bei hohen Fahrzeuggeschwindigkeiten von Umgebungsluft durchströmt. Die am Drehgestell vorbeigeführten hohen Luftmassen bewirken, dass insbesondere bisher nicht durch das Schienenfahrzeug beeinflusste Luft in die Drehgestellkavität eindringt und dort eine Erhöhung des Fahrwiderstands für das Schienenfahrzeug zur Folge hat. Dies betrifft insbesondere das in Fahrtrichtung des Schienenfahrzeugs gesehen, erste Drehgestell.

Zudem hat die begrenzte Dichtigkeit der Drehgestellkavität den Nachteil, dass mit Schmutz- und/oder (im Winter) mit Schneepartikeln beladene Luft in die Drehgestellkavität ein35 dringt und eingetragene Partikel sich dort absetzen können. Dies führt zu einem erhöhten Wartungsaufwand oder sogar zu Schäden.

Die begrenzte Dichtigkeit der Drehgestellkavität hat somit negative Folgen sowohl für den Strömungswiderstand des Schienenfahrzeugs, insbesondere wenn es sich um ein Hochgeschwindigkeitsfahrzeug handelt, als auch für den Wartungsaufwand im Bereich der Drehgestelle.

Ausgehend hiervon liegt der Erfindung die Aufgabe zugrunde, ein Schienenfahrzeug der eingangs genannten Art derart weiterzuentwickeln, dass die negativen Folgen der begrenzten Dichtigkeit der Drehgestellkavität vermindert werden.

Diese Aufgabe wird durch ein Schienenfahrzeug mit den Merkmalen des Anspruchs 1 gelöst.

Danach ist es bei dem Schienenfahrzeug der eingangs genannten Art vorgesehen, dass die Vorrichtung zur Erzeugung druckbeaufschlagter Luft mit einer Lufteinlassvorrichtung in den Wandungen der Drehgestellkavität derart strömungstechnisch verbunden ist, dass die Luft in die Drehgestellkavität einblasbar ist.

Durch das Einblasen der druckbeaufschlagten Luft in die Drehgestellkavität wird es ermöglicht, den Druck innerhalb der Drehgestellkavität derart zu erhöhen, dass die die Drehgestellkavität durchströmenden Luftmassen vermindert werden. Eine Verringerung der Durchströmung der Kavität senkt den Fahrwiderstand ab. Dies geht damit einher, dass mit den Luftmassen eingetragene Mengen an Staubpartikeln und im Winter Schnee ebenfalls herabgesetzt werden.

Die vorgesehene Lufteinlassvorrichtung kann beispielsweise in einem oberhalb des Drehgestells gelegenen Bodenplattenabschnitts des Schienenfahrzeugs vorgesehen sein. In diesem Fall wird druckbeaufschlagte Luft von einem an irgendeiner Stelle innerhalb des Schienenfahrzeugs gelegenen Ort der Vorrichtung zur Erzeugung druckbeaufschlagter Luft bis zu dem Bodenplattenabschnitt geführt und über die vorgesehene Lufteinlassvorrichtung in die Drehgestellkavität eingeblasen.

Die Fließrichtung der druckbeaufschlagten Luft innerhalb der Drehgestellkavität wäre im Wesentlichen vertikal nach unten in Richtung auf das Drehgestell.

Bei einer alternativen oder auch ergänzten Ausführungsform können die Wandungen der Drehgestellkavität in Längsrichtung des Schienenfahrzeugs vor und hinter dem Drehgestell gelegene Schottwände umfassen, wobei die Lufteinlassvorrichtung in wenigstens einer der Schottwände vorgesehen ist. Solche Schottwände stehen vor und hinter dem Drehgestell typischerweise in im Wesentlichen vertikaler Ausrichtung. Die über eine oder auch beide Schottwände eingeblasene druckbeaufschlagte Luft strömt dann im Wesentlichen horizontal entlang des Drehgestells.

Unabhängig von der Richtung der Lufteinblasung in die Drehgestellkavität kann die Lufteinlassvorrichtung zur flächigen Einblasung der Luft in die Drehgestellkavität ausgebildet sein. Im Fall einer Lufteinblasung über den Bodenplattenabschnitt kann beispielsweise der gesamte Bereich der Bodenplatte, der oberhalb des Drehgestells liegt, zur Lufteinblasung verwendet werden. Dabei kann die Lufteinlassvorrichtung in Form eines Lochmusters, das in den Bodenplattenabschnitt eingearbeitet ist, vorliegen. Das Lochmuster kann flächig verteilt sein. Alternativ kann es sich bei der Einblasung auch um einzelne Rohre/Düsen, ebenfalls flächig verteilt, einen oder mehrere Kanäle oder einfach ein großes Rohr handeln. Alle anderen Arten von Durchlässen (Gitter, ...) sind ebenfalls für die Einblasung der druckbeaufschlagten Luft denkbar.

Im Fall der ggf. zusätzlichen Lufteinblasung über die Schottwände kann die Lufteinlassvorrichtung in entsprechender Weise als Lochmuster ausgebildet sein. Dieses Lochmuster kann große Teile oder auch eine Gesamtfläche der Schottwand umfassen.

Außerdem ist es möglich, dass die Lufteinlassvorrichtung zur punktuellen Einblasung der Luft in die Drehgestellkavität ausgebildet ist. In diesem Fall ist ein Querschnitt der eingeblasenen Luftmassen eng begrenzt.

Zudem kann vorgesehen sein, dass die Lufteinlassvorrichtung als in die Drehgestellkavität hineinragende Düse (oder als Schlauch) ausgebildet ist. Auch in dieser Weise lässt sich ein erhöhter Luftdruck in der Drehgestellkavität erzeugen. Im Hinblick auf besonders gefährdete Drehgestellbereiche, was die Anlagerung von Schneepartikeln im Winter angeht, kann eine oder mehrere solcher Düsen auch auf besonders gefährdete Drehgestellbereiche ausgerichtet sein.

Für die Vorrichtung zur Erzeugung druckbeaufschlagter Luft kommt jedwede verfügbare Quelle innerhalb eines Schienenfahrzeugs in Frage. Selbst ein einzelner Lüfter, der beispielsweise Kühlluft an einer zu entwärmenden Komponente des Schienenfahrzeugs vorbeiführt, ist geeignet, als Vorrichtung zur Erzeugung druckbeaufschlagter Luft eingesetzt zu werden. In einem solchen Fall wird die erwärmte Kühlluft nach Passieren der zu entwärmenden Komponente weiter in Richtung der Drehgestellkavität geführt, so dass sie über die Lufteinlassvorrichtung in die Drehgestellkavität einblasbar ist.

Beispielsweise ist die Vorrichtung zur Erzeugung druckbeaufschlagter Luft von einem Fortluftgerät einer Klimatisierungseinrichtung des Schienenfahrzeugs gebildet. Alternativ oder zusätzlich ist es auch möglich, dass diese Vorrichtung von einem Transformator- oder einem Stromrichterkühler des Schienenfahrzeugs gebildet ist. In sämtlichen Fällen für die Ausbildung der Vorrichtung zur Erzeugung druckbeaufschlagter Luft wird die der Drehgestellkavität zugeführte Luft über eine erhöhte Temperatur verfügen, so dass durch geeignetes Einblasen der Luft, beispielsweise über wenigstens eine Düse, gezielt Anlagerungen von Schnee im Drehgestellbereich vermindert werden können. Es erfolgt ein Tauen der in die Drehgestellkavität eingetretenden Schneepartikel bzw. ein Abschmelzen vorhandener Schneeablagerungen durch eine erhöhte Temperatur der Druckbeaufschlagten Luft.

Nebeneffekt der dargestellten Ausführungsformen für die Vorrichtung zur Erzeugung druckbeaufschlagter Luft ist es, das die jeweilige Luft im Vergleich zu ihrer herkömmlichen Funktion einen weiteren Zweck erfüllt. Erforderlich ist lediglich eine geeignete Leitungsanordnung zum Zuführen der Luft in Richtung auf die Drehgestellkavität.

Die Vorrichtung zur Erzeugung druckbeaufschlagter Luft kann derart gesteuert sein, dass der in der Drehgestellkavität erzeugte Druck wenigstens ein Bar beträgt. Grundsätzlich ist es wünschenswert, wenn der Druck innerhalb der Drehgestellkavität wenigstens dem anliegenden Druck der Umgebungsluft entspricht, denn in diesem Fall wird ein Einströmen der Außenluft in die Drehgestellkavität wirksam vermindert. So kann bei einem Normdruck außerhalb des Drehgestells von 101325 Pa der Druck in der Drehgestellkavität größer als 101825 Pa, bevorzugt größer als 102325 Pa und besonders bevorzugt größer als 102825 Pa sein.

Ausführungsbeispiele der Erfindung werden nachfolgend unter Bezugnahme auf die Zeichnungen noch näher erläutert, wobei funktionsgleiche Komponenten mit denselben Bezugszeichen bezeichnet sind. Es zeigen:
- Figur 1: eine schematische Querschnittsansicht eines Drehgestellbereichs eines Schienenfahrzeugs in einer ersten Ausführungsform,
- Figur 2: eine schematische Querschnittsansicht eines Drehgestellbereichs eines Schienenfahrzeugs in einer zweiten Ausführungsform,
- Figur 3: eine schematische Querschnittsansicht eines Drehgestellbereichs eines Schienenfahrzeugs in einer dritten Ausführungsform,
- Figur 4: eine schematische Querschnittsansicht eines Drehgestellbereichs eines Schienenfahrzeugs in einer vierten Ausführungsform,
- Figur 5: eine schematische Querschnittsansicht eines Drehgestellbereichs eines Schienenfahrzeugs in einer fünften Ausführungsform.

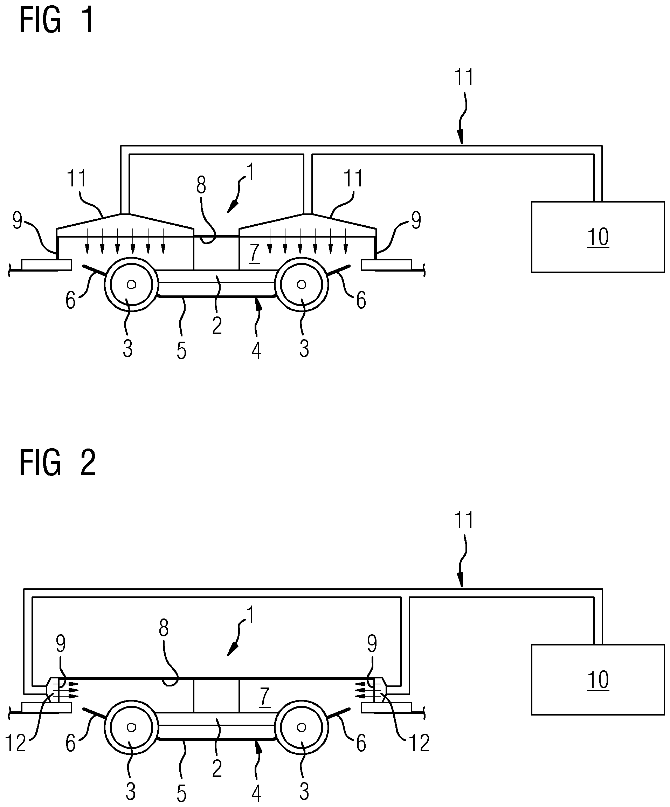

Aus Figur 1 geht ein Drehgestellbereich eines Schienenfahrzeugs hervor. Ein Drehgestell 1 weist in herkömmlicher Weise einen Drehgestellrahmen 2 auf, an dem Räder 3 des Drehgestells 1 gelagert sind. Das Drehgestell 1 ist mit einer Verkleidung 4 ausgestattet, die einen inneren, horizontal unterhalb des Drehgestellrahmens 2 zwischen den Rädern 3 verlaufenden Abschnitt 5 und zwei sich an den Abschnitt 5 vor und hinter dem Drehgestellrahmen 2 schräg aufwärts erstreckende Abschnitte 6 aufweist. Mit Hilfe der Drehgestellverkleidung 4 ist somit das Drehgestell sowohl nach unten als auch seitlich verkleidet, so dass anströmende Außenluft im Wesentlichen nur noch durch Spalte zwischen den äußeren freien Kanten der Verkleidungsabschnitte 6 und dem nächstliegenden Bereich des Schienenfahrzeug-Wagenkastens hindurch gelangen kann.

Das Drehgestell 1 ist in einer Drehgestellkavität 7 angeordnet, die nach unten durch die Drehgestellverkleidung 4 begrenzt ist. Nach oben ist die Drehgestellkavität 7 durch einen Bodenplattenabschnitt 8 des Schienenfahrzeugs begrenzt, während die Drehgestellkavität 7 seitlich in Längsrichtung des Schienenfahrzeugs von Schottwänden 9 gebildet ist. Die Schottwände 9 verlaufen vertikal nach unten und begrenzen den hier relevanten Bodenplattenabschnitt 8 in Längsrichtung des Schienenfahrzeugs.

Durch die vorerwähnten Spalte zwischen den äußeren Kanten der Verkleidungsabschnitte 6 und dem Schienenfahrzeug-Wagenkasten einströmende Außenluft sammelt sich in der Drehgestellkavität 7 und verursacht damit insbesondere bei Hochgeschwindigkeitszügen einen erheblichen Fahrwiderstand, wobei zudem beispielsweise Schmutzpartikel in die Drehgestellkavität 7 eingetragen werden.

Zur Verminderung des Fahrwiderstandes und des Eintrags von Schmutzpartikeln (im Winter auch Schnee) wird in die Drehgestellkavität 7 druckbeaufschlagte Luft eingeblasen. Als Quelle für die druckbeaufschlagte Luft kommen grundsätzlich sämtliche Einrichtungen des Schienenfahrzeugs in Frage, die eine Art von Abluft generieren. Druckbeaufschlagte Luft kann auch von einer "herkömmlichen" Druckluftanlage stammen, wie z.B. dem Hauptluftpresser (erzeugt Druckluft für Bremse und Panto etc.). Vorstellbar ist zudem, gesondert zusätzlich eine Anlage nur für diesen Zweck einzubauen, wenn man z.B. gezielt Schneeanlagerung verhindern will. Fahrwiderstandstechnisch würde eine solche Vorgehensweise allerdings voraussichtlich nachteilig sein. Beispiele für eine Vorrichtung zur Erzeugung druckbeaufschlagter Luft 10 sind diverse Kühlgeräte des Schienenfahrzeugs, wie beispielsweise ein Transformatorkühler oder ein Stromrichterkühler, die typischer Weise unterflur des Schienenfahrzeugs angeordnet sind und sich damit in der Nähe des Drehgestells 1 befinden. Die Vorrichtung 10 zur Erzeugung druckbeaufschlagter Luft kann aber ebenso von einem Fortluftgerät einer Klimatisierungseinrichtung des Schienenfahrzeugs gebildet sein, welches sich typischer Weise eher im Dachbereich des Schienenfahrzeugs befindet. Anhängig von der Art der eingesetzten Vorrichtung 10 zur Erzeugung druckbeaufschlagter Luft sind strömungstechnische Verbindungen zu der Drehgestellkavität 7 herzustellen. Im Ausführungsbeispiel nach der Figur 1 befindet sich eine Leitungsanordnung 11 zwischen der Vorrichtung 10 zur Erzeugung druckbeaufschlagter Luft und im dargestellten Ausführungsbeispiel zwei Lufteinlassvorrichtungen 11, die im Bereich des Bodenplattenabschnitts 8 angeordnet sind. Die Lufteinlassvorrichtung 11 kann beispielsweise in Form eines Lochmusters realisiert sein. Die Lochmuster erstrecken sich über den gesamten Bodenplattenabschnitt 8, der die obere Wandung der Drehgestellkavität 7 ausbildet, ausgenommen einen zentralen Bereich, in dem sich ein Querträger des Drehgestellrahmens 2 sowie eine
Sekundärfederung für das Schienenfahrzeug befindet. Insofern erfolgt die Einblasung druckbeaufschlagter Luft in flächiger Art und Weise. Die Einblasung der Luft bewirkt, dass ein innerhalb der Drehgestellkavität 7 herrschender Druck erhöht wird. Dies hat zur Folge, dass sich außerhalb von Undichtigkeiten der Drehgestellkavität 7 an einer Luftaustrittsfläche zur Umgebung ein Luftpolster ausbildet, welches ein Eindringen von Außenluft in die Drehgestellkavität 7 und damit auch den Fahrwiderstand des Drehgestells 1 vermindert. Gleichzeitig wird auch ein Eintrag von Schmutz- oder Schneepartikeln in die Drehgestellkavität 7 herabgesetzt. Im Hinblick auf die Art der eingesetzten Vorrichtung 10 zur Erzeugung druckbeaufschlagter Luft ist zu beachten, dass in sämtlichen dargestellten Ausführungsbeispielen die Luft von erhöhter Tempera-tur ist, so dass bei Betrieb des Schienenfahrzeugs im Winter selbst bereits angelagerter Schnee in der Drehgestellkavität 7 geschmolzen und damit wenigstens teilweise entfernt werden kann.

Die anhand der Figuren 2 bis 5 veranschaulichten Ausführungsformen haben mit der anhand der Figur 1 erläuterten gemeinsam, dass eine Einblasung druckbeaufschlagter Luft dazu genutzt wird, in der Drehgestellkavität 7 ein Luftpolster zu generieren, welches dem Eindringen von Außenluft entgegenwirkt. Modifikationen finden sich in erster Linie in der Realisierung der Einblasung der druckbeaufschlagten Luft. In Figur 2 steht die Vorrichtung 10 zur Erzeugung druckbeaufschlagter Luft mit Lufteinlassvorrichtungen 12 in Verbindung, die in den Schottwänden 9 der Drehgestellkavität 7 vorgesehen sind. Hier erfolgt die Einblasung druckbeaufschlagter Luft somit in horizontaler Richtung längst des Schienenfahrzeugs in die Drehgestellkavität 7 hinein.

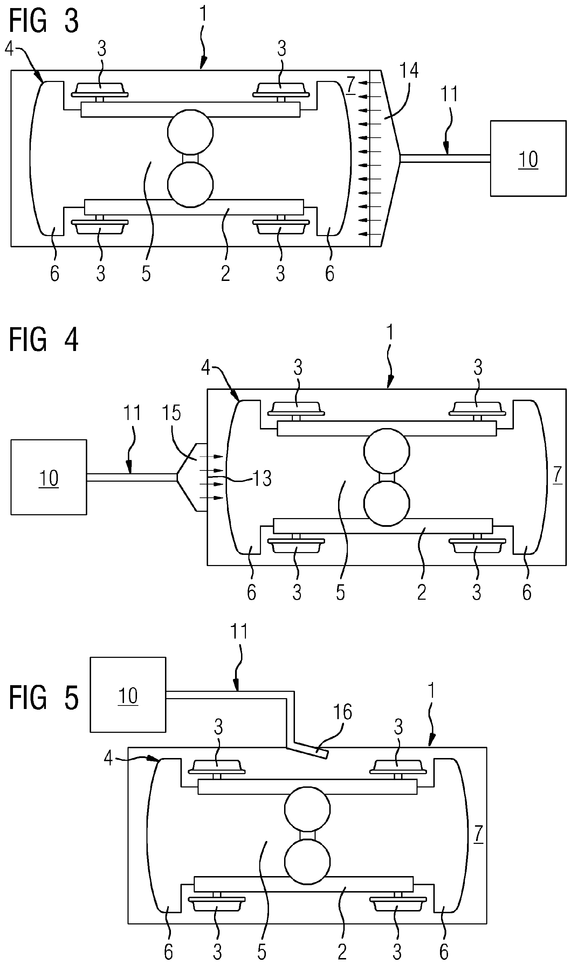

Bei dem Ausführungsbeispiel nach Figur 3 erfolgt die Lufteinblasung über die Schottwand 9 flächig, d.h. über die gesamte Breite und Höhe der Schottwand 9, während in Figur 4 die Einblasung punktuell vorgenommen wird, d.h. beispielsweise über einen Bereich 13, der sich über weniger als 25% der Fläche der Schottwand 9 erstreckt. Das Einblasen der druckbeaufschlagten Luft wird in Figur 3 mit Hilfe einer angepasst dimensionierten Lufteinlassvorrichtung 14 und in Figur 4 mit einer entsprechend bemessenen Lufteinlassvorrichtung 15 vor-genommen.

Bei der Ausführungsform nach Figur 5 wird die druckbeaufschlagte Luft, wiederum erzeugt durch die Vorrichtung 10 und der Drehgestellkavität über die Leitungsanordnung 11 zugeleitet, über eine in die Drehgestellkavität 7 hineinragende Düse 16 eingeblasen. Dabei steht die dargestellte Düse 16 stellvertretend für eine mögliche Mehrzahl gleichartiger Düsen, die auf Drehgestellbereiche gerichtet sein können, die besonders hinsichtlich Anlagerungen von Schmutz und/oder Schnee gefährdet sind. Die Düse 16 kann beispielsweise über einen Schlauchabschnitt an die Leitungsanordnung 11 angeschlossen sein.

Sämtlichen dargestellten Ausführungsformen ist gemeinsam, dass der Luftwiderstand des Schienenfahrzeugs, insbesondere ein solches für den Hochgeschwindigkeitsverkehr, vermindert ist. Dies wird grundsätzlich durch eine wesentlich günstigere, widerstandsärmere Umströmung des Drehgestells durch die fahrzeugseitig erzeugte druckbeaufschlagte Luft erreicht. Hervorzuheben ist zudem, dass die für die Kühlung anderer Komponenten bzw. für die Klimaanlage des Schienenfahrzeugs eingesaugte und somit in der weiteren Verwendung widerstandsneutrale Luft, erneut benutzt wird, um den Luftwiderstand zu senken und den aerodynamischen Schutz gegen Verschmutzung der Drehgestellkavität 7 herbeizuführen.

## Patentansprüche

1. Schienenfahrzeug mit einem Drehgestell (1), das derart verkleidet ist, dass eine Drehgestellkavität (7) vorliegt, die von einer Verkleidungsanordnung (4) und dem Drehgestell (1) benachbarten Wandungen (8, 4) im Unterflurbereich des Schienenfahrzeugs gebildet ist, und mit einer Vorrichtung (10) zur Erzeugung druckbeaufschlagter Luft,
**dadurch gekennzeichnet, dass**
die Vorrichtung (10) zur Erzeugung druckbeaufschlagter Luft mit einer Lufteinlassvorrichtung (11) in den Wandungen (8, 9) der Drehgestellkavität (7) derart strömungstechnisch verbunden ist, dass die Luft in die Drehgestellkavität (7) einblasbar ist.

2. Schienenfahrzeug nach Anspruch 1,
**dadurch gekennzeichnet, dass**
die Lufteinlassvorrichtung (11 - 14) in einem oberhalb des Drehgestells (1) gelegenen Bodenplattenabschnitt (8) des Schienenfahrzeugs vorgesehen ist.

3. Schienenfahrzeug nach Anspruch 1,
**dadurch gekennzeichnet, dass**
die Wandungen (8, 9) der Drehgestellkavität (7) in Längsrichtung des Schienenfahrzeugs vor und hinter dem Drehgestell (1) gelegene Schottwände (9) umfassen, wobei die Lufteinlassvorrichtung (12 - 14) in wenigstens einer der Schottwände (9) vorgesehen ist.

4. Schienenfahrzeug nach einem der Ansprüche 1 bis 3,
**dadurch gekennzeichnet, dass**
die Lufteinlassvorrichtung (11, 14) zur flächigen Einblasung der Luft in die Drehgestellkavität (7) ausgebildet ist.

5. Schienenfahrzeug nach einem der Ansprüche 1 bis 3,
**dadurch gekennzeichnet, dass**
die Lufteinlassvorrichtung (13) zur punktuellen Einblasung der Luft in die Drehgestellkavität (7) ausgebildet ist.

6. Schienenfahrzeug nach einem der Ansprüche 1 bis 3,
**dadurch gekennzeichnet, dass**
die Lufteinlassvorrichtung (11 - 14) als in die Drehgestellkavität hineinragende Düse (16) ausgebildet ist.

7. Schienenfahrzeug nach einem der Ansprüche 1 bis 6,
**dadurch gekennzeichnet, dass**
die Vorrichtung (10) zur Erzeugung druckbeaufschlagter Luft von einem Fortluftgerät einer Klimatisierungseinrichtung des Schienenfahrzeugs gebildet ist.

8. Schienenfahrzeug nach einem der Ansprüche 1 bis 6,
**dadurch gekennzeichnet, dass**
die Vorrichtung (10) zur Erzeugung druckbeaufschlagter Luft von einem Transformatorkühler des Schienenfahrzeugs gebildet ist.

9. Schienenfahrzeug nach einem der Ansprüche 1 bis 6,
**dadurch gekennzeichnet, dass**
die Vorrichtung (10) zur Erzeugung druckbeaufschlagter Luft von einem Stromrichterkühler des Schienenfahrzeugs gebildet ist.

10. Schienenfahrzeug nach einem der Ansprüche 1 bis 9,
**dadurch gekennzeichnet, dass**
die Vorrichtung (10) zur Erzeugung druckbeaufschlagter Luft derart gesteuert ist, dass der in der Drehgestellkavität (7) erzeugte Druck größer als ein an der Drehgestellkavität vorherrschende äußere Umgebungsdruck ist.

## Claims

1. Rail vehicle having a bogie (1) which is covered in such a manner that there is present a bogie cavity (7) which is formed by a covering arrangement (4) and walls (8, 4) adjacent to the bogie (1) in the underfloor region of the rail vehicle, and having a device (10) for producing pressurized air,
**characterized in that**
the device (10) for producing pressurized air is connected in technical flow terms to an air inlet device (11) in the walls (8, 9) of the bogie cavity (7) in such a manner that the air can be blown into the bogie cavity (7).

2. Rail vehicle according to Claim 1,
**characterized in that**
the air inlet device (11-14) is provided in a base plate portion (8) of the rail vehicle located above the bogie (1).

3. Rail vehicle according to Claim 1,
**characterized in that**
the walls (8, 9) of the bogie cavity (7) comprise bulkheads (9) which are located in front of and behind the bogie (1) in the longitudinal direction of the rail vehicle, wherein the air inlet device (12-14) is provided in at least one of the bulkheads (9).

4. Rail vehicle according to one of Claims 1 to 3,
**characterized in that**
the air inlet device (11, 14) is constructed for blowing the air into the bogie cavity (7) in a planar manner.

5. Rail vehicle according to one of Claims 1 to 3,
**characterized in that**
the air inlet device (13) is constructed for blowing the air into the bogie cavity (7) in a localized manner.

6. Rail vehicle according to one of Claims 1 to 3,
**characterized in that**
the air inlet device (11-14) is constructed as a nozzle (16) which protrudes into the bogie cavity.

7. Rail vehicle according to one of Claims 1 to 6,
**characterized in that**
the device (10) for producing pressurized air is formed by an exhaust air device of an air-conditioning device of the rail vehicle.

8. Rail vehicle according to one of Claims 1 to 6,
**characterized in that**
the device (10) for producing pressurized air is formed by a transformer cooler of the rail vehicle.

9. Rail vehicle according to one of Claims 1 to 6,
**characterized in that**
the device (10) for producing pressurized air is formed by a power converter cooler of the rail vehicle.

10. Rail vehicle according to one of Claims 1 to 9,
**characterized in that**
the device (10) for producing pressurized air is controlled in such a manner that the pressure produced in the bogie cavity (7) is greater than an external ambient pressure present in the bogie cavity.

## Revendications

1. Véhicule ferroviaire comprenant un bogie (1) habillé de manière à donner une cavité (7) de bogie, formée dans la partie sous caisse du véhicule ferroviaire, d'un agencement (4) d'habillage et de parois (8, 4) voisines du bogie, et ayant un dispositif (10) de production d'air mis sous pression,
**caractérisé en ce que**
le dispositif (10) de production d'air mis sous pression communique fluidiquement avec un dispositif (11) d'entrée d'air dans les parois (8, 9) de la cavité (7) du bogie, de manière à pouvoir insuffler l'air dans la cavité (7) du bogie.

2. Véhicule ferroviaire suivant la revendication 1,
**caractérisé en ce que**
le dispositif (11 à 14) d'entrée d'air est prévu dans une partie (8) de plateau de fond, mise au dessus du bogie (1), du véhicule ferroviaire.

3. Véhicule ferroviaire suivant la revendication 1,
**caractérisé en ce que**
les parois (8, 9) de la cavité (7) du bogie comprennent des parois (9) de cloisonnement, mises dans la direction longitudinale du véhicule ferroviaire, en avant et en arrière du bogie (1), le dispositif (12 à 14) d'entrée d'air étant prévu dans au moins l'une des parois (9) de cloisonnement.

4. Véhicule ferroviaire suivant l'une des revendications 1 à 3,
**caractérisé en ce que**
le dispositif (11, 14) d'entrée d'air est constitué pour une insufflation plane de l'air dans la cavité (7) du bogie.

5. Véhicule ferroviaire suivant l'une des revendications 1 à 3,
**caractérisé en ce que**
le dispositif (13) d'entrée d'air est constitué pour l'insufflation ponctuelle de l'air dans la cavité (7) du bogie.

6. Véhicule ferroviaire suivant l'une des revendications 1 à 3,
**caractérisé en ce que**
le dispositif (11 à 14) d'entrée d'air est constitué sous la forme d'une buse (16) pénétrant dans la cavité du bogie.

7. Véhicule ferroviaire suivant l'une des revendications 1 à 6,
**caractérisé en ce que**
le dispositif (10) de production d'air mis sous pression est formé d'un appareil d'air d'échappement d'un dispositif de conditionnement d'air du véhicule ferroviaire.

8. Véhicule ferroviaire suivant l'une des revendications 1 à 6,
**caractérisé en ce que**
le dispositif (10) de production d'air mis sous pression est formé d'un refroidisseur de transformateur du véhicule ferroviaire.

9. Véhicule ferroviaire suivant l'une des revendications 1 à 6,
**caractérisé en ce que**
le dispositif (10) de production d'air mis sous pression est formé d'un refroidisseur de convertisseur du véhicule ferroviaire.

10. Véhicule ferroviaire suivant l'une des revendications 1 à 9,
**caractérisé en ce que**
le dispositif (10) de production d'air mis sous pression est commandé, de manière à ce que la pression produite dans la cavité (7) du bogie soit plus haute qu'une pression ambiante extérieure prépondérante dans la cavité du bogie.
